# EUROPEAN PATENT SPECIFICATION

(11) **EP 2 043 365 B1**
(45) Date of publication and mention of the grant of the patent: **19.06.2013**
(21) Application number: 07118405.5
(22) Date of filing: 12.10.2007
(51) Int. Cl.: H04N 5/60, H04J 3/06, H04L 7/04, H04N 7/50, H04N 7/26

(54) **Multimedia data synchronization method and system**
Verfahren und System für die Multimedia-Datensynchronisierung
Procédé et système de synchronisation de données multimédia

(30) Priority: 24.09.2007 US 589838
(43) Date of publication of application: 01.04.2009
(73) Proprietor: MediaTek Inc., Hsin-Chu 300 (TW)
(72) Inventor: Wei, Hsing-Ju, Kee-Lung City, Taiwan (TW); Hsu, Chien-Hua, 300 Hsinchu City, Taiwan (TW); Ku, Po-Wen, Hsinchu County, Taiwan (TW)
(74) Representative: 2K Patentanwälte Blasberg Kewitz & Reichel

(56) References cited:
- EP-A- 0 514 041
- EP-A- 1 126 722
- US-A1- 2008 031 284
- SHIPTON G ET AL: "NICAM DECODER FOR DIGITAL MULTI-CHANNEL TV SOUND BROADCAST" IEEE TRANSACTIONS ON CONSUMER ELECTRONICS, IEEE SERVICE CENTER, NEW YORK, NY, US, vol. 37, no. 3, 1 August 1991 (1991-08-01), pages 684-691, XP000263257 ISSN: 0098-3063
- "Television systems; NICAM 728: transmission of two-channel digital sound with terrestrial television systems B, G, H, I, K1 and L; EN 300 163" ETSI STANDARDS, EUROPEAN TELECOMMUNICATIONS STANDARDS INSTITUTE, SOPHIA-ANTIPO, FR, vol. BC, no. V121, March 1998 (1998-03), XP014000587 ISSN: 0000-0001

## Description

### BACKGROUND OF THE INVENTION

### Field of the Invention

The invention relates to data synchronization, and more particularly to multimedia data synchronization method and system utilizing additional information.

### Description of the Related Art

NICAM (Near Instantaneous Companded Audio Multiplex), an audio multiplex system developed by the BBC, is used in PAL/SECAM TV broadcasting in Europe and Asia. A general NICAM frame starts with an 8-bit "Frame Alignment Word" (FAW), followed by five control bits, eleven bits of unprotected (no parity) additional data, and 704 bits of parity checked data, represented as:

| | | | |
|---|---|---|---|
| FAW (8 bits) | Control (5 bits) | Additional Data (11 bits) | Data (704 bits) |

Five control bits (C0, C1, C2, C3, C4) are provided in each NICAM frame. The first bit C0 is a frame flag used for synchronization of NICAM frames, identifying the odd (C0=1) and even (C0=0) frames. The next three bits C1, C2, and C3 are used to specify the mode of transmission. Table 1 shows the relationship between the mode of operation and the bits C1, C2 and C3. The fifth control bit C4, a reserve sound switching flag, notifies the receiver if NICAM is lost. The receiver can then switch to the frequency modulation (FM) mono sound signal.

**Table 1**

| C1 | C2 | C3 | Mode of operation |
|---|---|---|---|
| 0 | 0 | 0 | One digital stereo channel |
| 0 | 1 | 0 | Two different mono channels (M1 and M2) |
| 1 | 0 | 0 | One 44K data channel and one mono sound channel |
| 1 | 1 | 0 | One 88K data channel (704Kbit/sec) |

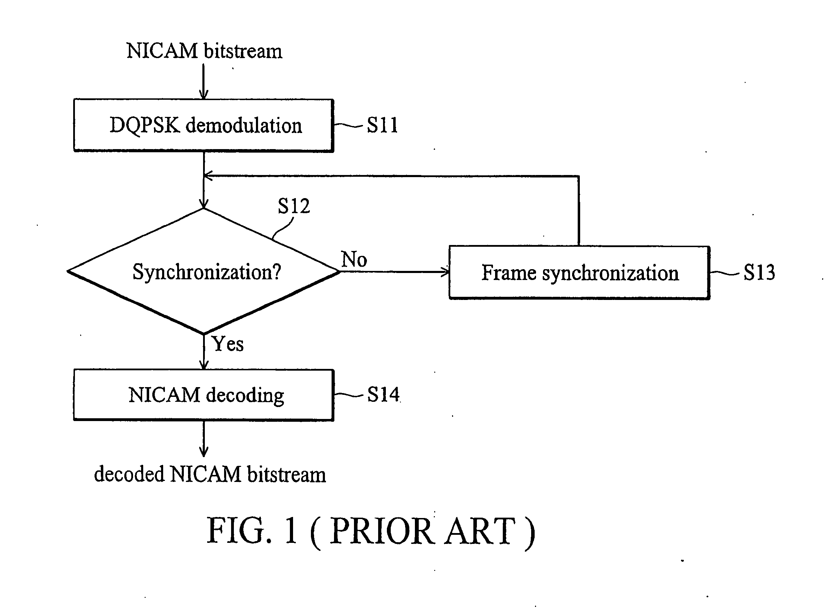

Fig. 1 is a flowchart of a NICAM bitstream professing method. When a NICAM bitstream is input, differential quaternary phase-shift keying (DQPSK) demodulation is first performed (step S11) to determine whether NICAM frames arc synchronized (step S12). If not, the NICAM frames arc then synchronized (step S13), and the process proceeds to step S12. If the NICAM frames are synchronized in step S12, the NICAM frames are decoded to output the decoded NICAM bitstream (step S14).

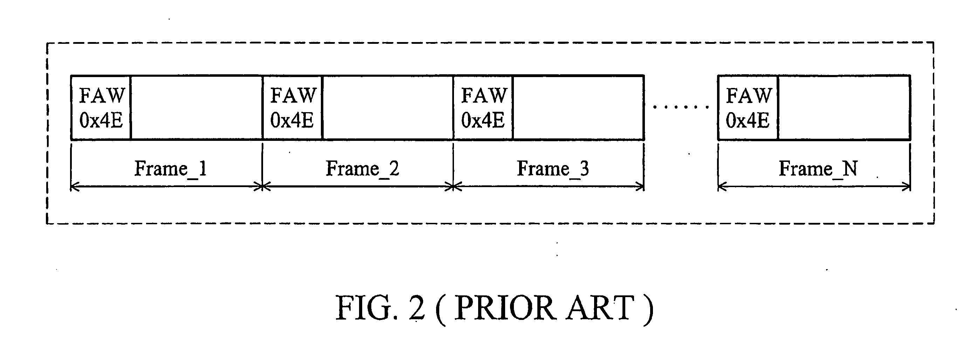

Referring to Fig. 2, when the NICAM bitstream is received, it is determined whether a FAW with 0x4E is detected. When N FAWs with 0x4E are detected, decoding from the first frame begins. In the described process, however, a bitstream buffer is required to store input data for decoding from the first frame, decoding is not conducted in real time and false alarms may frequently occur. EP 0514041 A2 and Shipton G ET AL" Nicam Decoder for Digital Multi-Channel TV Sound Broadcast" IEEE Transactions on Consumer Electronics, vol. 37 no 3, 1 August 1991, pages 684-691 use a large number of RAM to buffer the frames to enable the decoder to find a starting point for the data decoding. Thus, it is desired to have a method for fast and accurate synchronization with reduced amount of required buffers.

### BRIEF SUMMARY OF THE INVENTION

An embodiment of a synchronisation method is provided. The synchronization method comprises receiving a bitstream, checking whether a FAW pattern corresponding to a candidate of the bitstream exists, checking whether an additional information corresponding to the candidate of the bitstream is valid when the FAW pattern exists, determining a hit weighting corresponding to the candidate according to the checking result and determining whether the hit weighting of the candidate meets a criterion.

Another embodiment of a multimedia data system is provided. The multimedia data system comprises a demodulation unit, a synchronization unit and a decoding unit. The demodulation unit demodulates a bitstream to output a demodulated bitstream. The synchronization unit receives the demodulated bitstream, checks whether a FAW pattern corresponding to a candidate of the bitstream exists, checks whether an additional information corresponding to the candidate of the bitstream is valid when the FAW pattern exists, determines a hit weighting corresponding to the candidate when the additional information is valid, checks whether the hit weighting meets a criterion and outputs a synchronization signal when the hit weighting meets the criterion. The decoding unit decodes the synchronisation signal to output a decoded bitstream.

A detailed description is given in the following embodiments with reference to the accompanying drawings.

### BRIEF DESCRIPTION OF THE DRAWINGS

The invention can be more fully understood by reading the subsequent detailed description and examples with references made to the accompanying drawings, wherein:

Fig. 1 is a flowchart of an NICAM bitstream processing method.

Figs. 2 is schematic view of locating FAWs for decoding an input bitstream.

Fig. 3 is a flowchart of a multimedia data synchronization method according to an embodiment of the invention.

Fig. 4 is schematic view of 16-frame sequence of NICAM bitstream.

Fig. 5 is a schematic diagram of a bitstream comprising a plurality of NICAM frames according to another embodiment of the invention.

Fig. 6 is a schematic diagram of the hit weighting unit 600 according to another embodiment of the invention.

Fig. 7 is a schematic view of combinations of control bit Co according to another embodiment of the invention.

Fig. 8 is a multimedia data system 800 according to another embodiment of the invention.

### DETAILED DESCRIPTION OF THE INVENTION

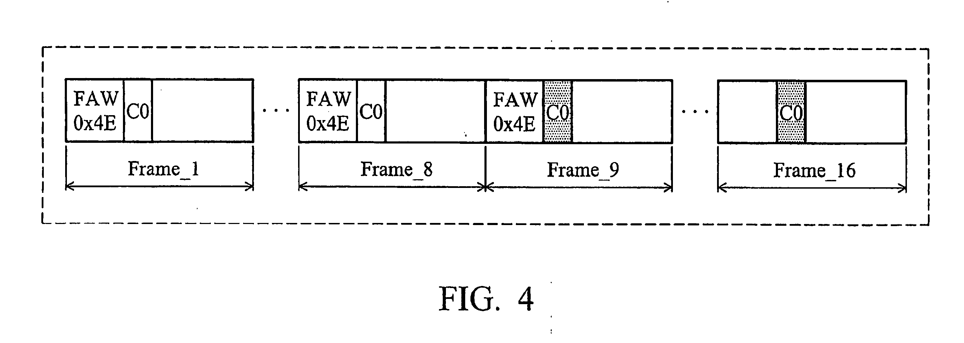

Several exemplary embodiments of the invention are described with reference to Figs. 4 through 8, which generally relate to multimedia data synchronization. It is to be understood that the following disclosure provides various different embodiments as examples for implementing different features of the invention. Specific examples of components and arrangements are described in the following to simplify the present disclosure. These arc, of course, arc merely examples and are not intended to be limiting. In addition, the present disclosure may repeat reference numerals and/or letters in the various examples. This repetition is for the purpose of simplicity and clarity and does not in itself dictate a relationship between the various described embodiments and/or configurations.

The invention discloses a multimedia data synchronization method, system, and apparatus.

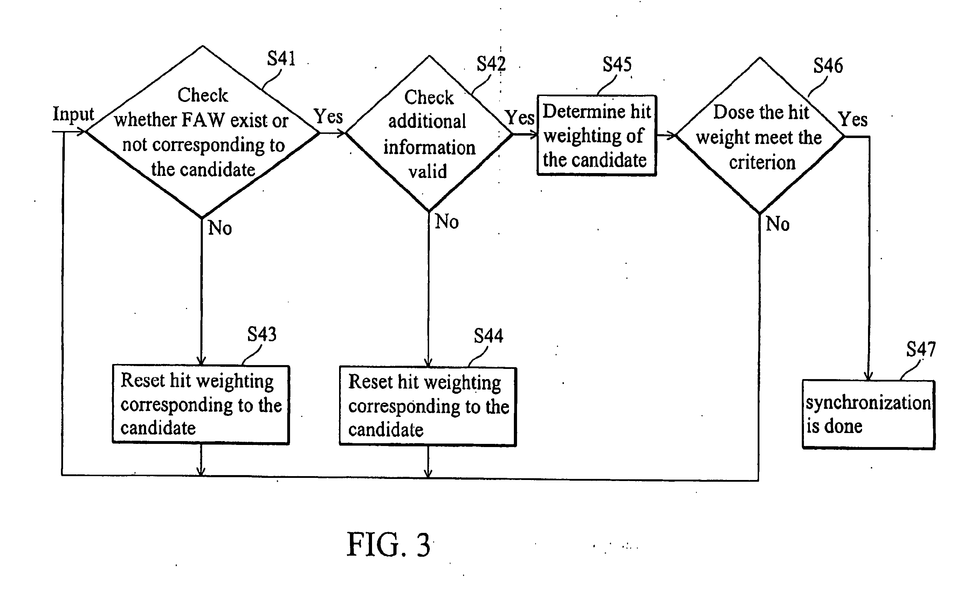

Fig. 3 is a flowchart of a multimedia data synchronization method according to an embodiment of the invention. When a bitstream, such as a NICAM bitstream, is input, each bit in a frame of the bitstream is a candidate for a frame start point and a hit weighting for each candidate is calculated for start point determination. A candidate with its subsequent 7 bits are involved to check whether a FAW pattern corresponding to the candidate exists or not (step S41). If the FAW pattern (01001110, 0x4E) corresponding to the candidate docs not exist, the hit weighting corresponding to the candidate is reset (step S43) and then a next candidate is checked whether FAW pattern exists or not (step S41). If the FAW pattern (01001110, 0x4E) corresponding to the candidate exists, additional information corresponding to the candidate is checked (step S42). When the additional information corresponding to the candidate is not valid, the hit weighting corresponding to the candidate is reset (step S44) and then the next candidate is checked (going back to step S41). In an embodiment of the invention, the additional information is the first control bit C0 of each frame which is the 9^{th} bit counted from the candidate. Fig. 4 shows a 16-frame sequence of NICAM bitstream. As shown, based on the NTCAM specification, the control bit, CO, of each NICAM frame are set to 1 for 8 successive frames, and, 0 for the next 8 frames, thus, a 16-frame valid sequence is defined. Other additional information, including frame synchronisation word, sampling rate, MPEG layer field, may also be utilized as the additional information for more precise synchronization. If the additional information corresponding to the candidate is valid, the hit weighting corresponding to the candidate is determined or increased (step S45) and then checked whether the hit weighting corresponding to the candidate meets the criterion (step S46). If not, the next candidate is checked (going back to step S41). If the hit weighting corresponding to the candidate meets the criterion, synchronization of the bitstream is completed (step S47). The candidate, which meets the criterion, is found as a frame starting point of the bitstream and decoding of the bistream is performed accordingly.

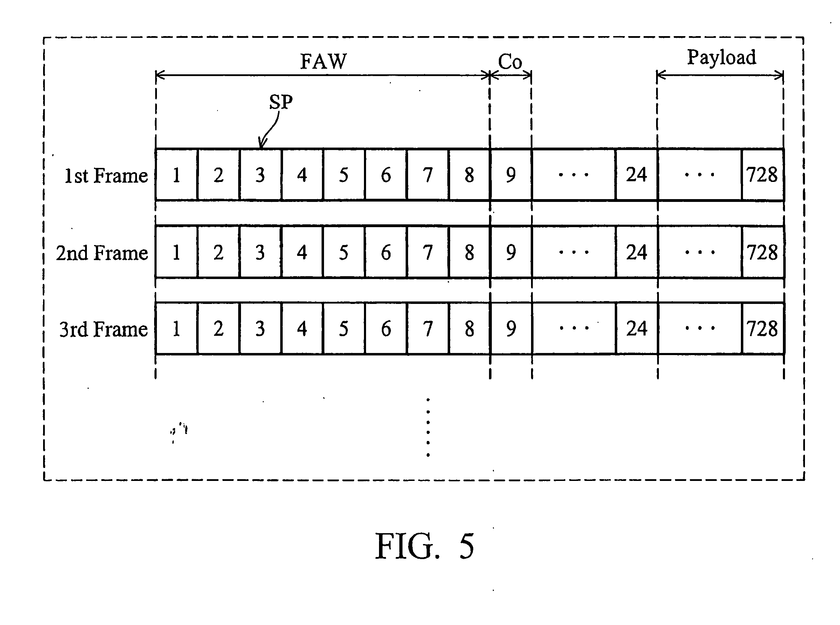

Fig. 5 is a schematic diagram of a bitstream comprising a plurality of NICAM frames according to another embodiment of the invention. The bitstream comprises 1^{st} frame, 2^{nd} frame, and 3^{rd} frame and so on... As described, since each NICAM frame comprises 728 bits, 728 candidates are provided for a frame starting point. The starting point can be anywhere, for example, the first bit of 1^{st} frame, the second bit of 1^{st} frame or the 728^{th} bit of 1^{st} frame. Thus, a hit weighting for each corresponding candidate of each frame is calculated for synchronization of the bitstream, wherein the first candidate is the (728*-n+1)ₜₕ sample, the second candidate is the (728*n+2)ₜₕ sample,...., and the Kₜₕ candidate is (728*n+k)_{d}, sample, where n≧0 and is an integer.

For example, if the first received bit SP is the 3^{rd} bit of 1^{st} frame, the first candidate is 3^{rd} bit of 1^{st} frame, the second candidate is 4^{th} bit of 1^{st} frame, the 728^{th} candidate is 2^{nd} of 2^{nd} frame and so forth. When receiving the 3^{rd} bit of 1^{st} frame, the 3^{rd} bit of 1^{st} frame together with the subsequent 7 bits, which are 3^{rd} ~10^{th} bits of 1^{st} frame, are checked to determine whether the FAW corresponding to the 3^{rd} bit of 1^{st} frame exists or not (step S41). To more specifically, the 3^{rd} ~10^{th} bits of 1^{st} frame are checked whether correspond to "01001110". Additional information corresponding to the candidate, such as the control bit C0 which is the bit following the FAW pattern, is then checked to be valid or not (step S42). In other words, the 9^{th} bit counted from the 3^{rd} bit of 1^{st} frame, which is the 11^{th} bit of 1^{st} frame is checked valid or not. As described, various additional information can be utilized for synchronization, the following will take control bit C0 as an example for further explain the operation of the method of the invention. It is also noted that NICAM bitstream is illustrated as examples but not to be limitative.

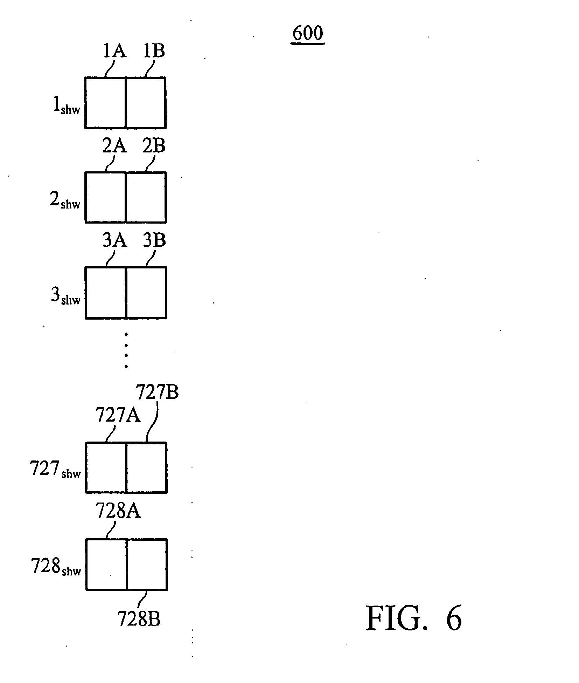

Fig. 6 is a schematic diagram of the hit weighting unit 600 for calculating hit weightings of candidates according to another embodiment of the invention. The hit weighting unit 600 comprising 728 sub weighting units (1_{shw}, 2_{shw}...728_{shw}), wherein each sub weighting unit calculates the hit weighting for a candidate. For example, sub weighting unit 1_{shw} calculates the hit weighting for the first candidate, sub weighting unit 2_{shw} calculates the hit weighting for the second candidate, and so forth. Each sub weighting unit (1_{shw}, 2_{shw}...728_{shw}) comprises two counters 1A~728A and 1B~728B for recording the additional information check result of corresponding candidate. The values of the counters 1A-728A and 1B-728B are determined according to the check result of the additional information of corresponding candidate when the FAW (01001110, 0x4E) pattern corresponding to the candidate exists. Conversely, the counters 1A~728A and 1B~728B are reset when the FAW pattern corresponding to the candidate docs not exist. To determine whether the additional information is valid, control bits C0 of 16 frames are involved for checking whether it is a valid control bit sequence. If a 16-frame sequence for the input bitstream provides 8 successive frames with each control bit set to 0 and 8 successive frames with each control bit set to 1, the additional information is valid. Hence, according to an exemplary embodiment, when the additional information is successive 0s, the counter of corresponding candidate (1A, 2A... or 728A) is increased. Similarly, when the additional information is successive 1s, the counter of corresponding candidate (1B, 2B,...,or 728B) is increased. When the additional information is not successive 8 0s (without change 0 to 1 one time), the additional information is not valid and the counter (1A, 2A......, or 728A) is reset or decreased. When the additional information is not successive 8 1s (without change 1 to 0 one time), the additional information is not valid and the counter (1B, 2B....., or 728B) is reset or decreased.

The values of the two counters of each candidate are checked to determine whether a candidate meets the criterion. The synchronization is completed when one of candidates meets the criterion. To summarize above, the criterion is met when the hit weighting calculated by the sub weighting unit of the candidate indicates that 16 FAW patterns corresponding to the candidate are found and the sequence of control bit C0, corresponding to the candidate, is valid where 8 successive C0 bits are equal to 0 and another 8 successive C0 bits are equal to 1. The bitstream is further decoded when synchronization is completed.

According to another embodiment of the invention, the hit weighting corresponding to the candidate is increased when the FAW pattern exists and the additional information is not against a valid sequence. The hit weighting corresponding to the candidate is decreased when the FAW pattern exists and the additional information is not a valid sequence. The hit weight corresponding to the candidate is reset when the FAW pattern corresponding to the candidate does not exist. When the criterion has met a predetermined value for one of the candidates, synchronization is completed and then the bitstream is decoded.

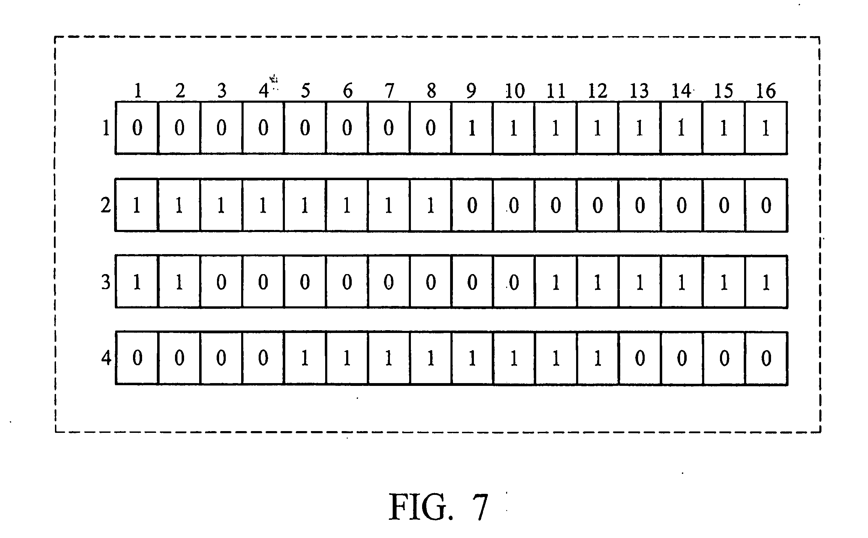

Fig. 7 is a schematic view of valid sequence of control bit values Co according to another embodiment of the invention. According to an embodiment of the invention, checking 11648 (16 frames) successive bits from the starting point SP for synchronisation. The valid sequence of control bit values (additional information) C0 bits comprises 0000000011111111, 1111111100000000, 1100000000111111, 0000111111110000, and others. The first and second valid sequences comprise 8 successive Co equal to 0 and another 8 successive Co equal to 1 which corresponds to the criterion. The third valid sequence comprises 8 successive C0 bits equal to 1, counted from the 11-16 C0 bits to the 1-2 C0 bits, and another 8 successive C0 bits equal to 0, which also corresponds to the criterion. The fourth valid sequence comprises 8 successive C0 bits equal to 0, counted from the 13-16 C0 bits to the 1-4 C0 bits, and another 8 successive C0 bits equal to 1, which also corresponds to the criterion. Other combination comprise 8 successive C0 equal to 0 and 8 Co equal to 1 or 8 successive C0 equal to 1 and 8 C0 equal to 0 which also meets the criterion.

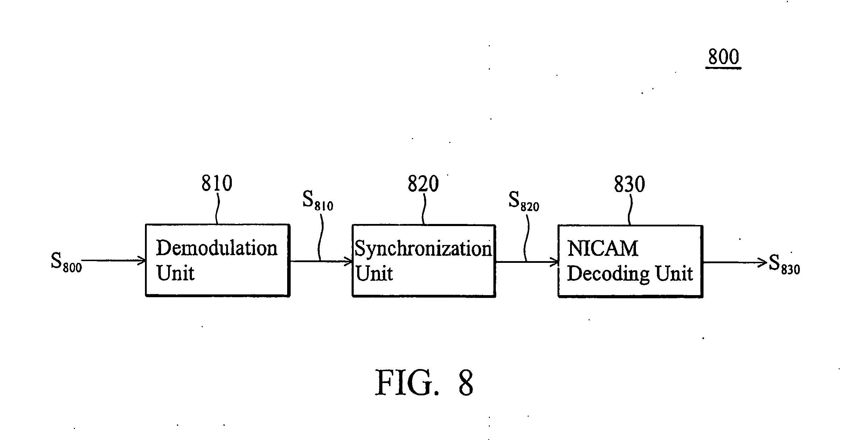

Fig. 8 is a multimedia data system 800 according to another embodiment of the invention. Multimedia data system 800 comprises demodulation unit 810, synchronization unit 820 and decoding unit 830. Demodulation unit 810 demodulates a bitstream S800 to output demodulated signal S810. Synchronization unit 820 synchronizes demodulated signal S810 to output synchronisation signal S820. The decoding unit 830 decodes synchronization signal S820 to outputs decoded bitstream S830. In an embodiment of the invention, the bitstream is a NICAM bitstream.

Further, a television or playback comprises demodulation unit 810 synchronisation unit 820 and decoding unit 830 according to another embodiment of the invention.

The invention provides a multimedia data synchronisation method and system, which uses less memory and does not require input data to be kept during synchronization. Additionally, when synchronization is completed, the decoding is performed immediately, eliminating processing delay.

The above embodiments of the method and system are also suitable for a constant bit rate bitstream, comprising a DTV transport stream of DTV, MP2, AC3, NICAM, and others.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A synchronization method, comprising:
receiving a bitstream;
checking whether an Frame Alignment Word (FAW) pattern corresponding to a candidate of the bitstream exists, wherein tho candidate stands for a possible frame start point;
checking whether an additional information corresponding to the candidate of the bitstream is valid when the FAW pattern exists, wherein the additional information is a control bit following the FAW pattern of the corresponding candidate;
determining a valid control bit sequence over a predetermined number of frames by counting the successive 0s and the successive 1s with a at least one counter wherein one change from 0 to 1 and one change from 1 to 0 are allowed defining also an allowed rotation combination of successive 0s and 1s over the number of frames otherwise the counter is decreased or reset ; and
determining whether a hit weighting of the candidate meets a criterion by checking the counted, and if the hit weighting corresponding to the candidate meets the criterion, synchronization of the bit stream is completed.

2. The synchronization method as claim in 1, wherein when the hit weighting of the candidate meets the criterion, decoding the bitstream.

3. the synchronization method as claim in 2, wherein the candidate meeting the criterion is a frame start point of the bitstream.

4. The synchronization method as claim in 1, wherein the additional information is a bit following the FAW pattern of the corresponding candidate.

5. The synchronization method as claim in 1, wherein the hit weighting corresponding to the candidate is inereased when the FAW pattern corresponding to the candidate exists and the additional information is not against a valid sequence.

6. The synchronization method as claim in 1, wherein the bit weighting corresponding to the candidate is decreased when the FAW pattern corresponding to the candidate exists and the additional information is not a valid sequence.

7. The synchronization method as claim in 1, wherein the hit weighting corresponding to the candidate is reset when the FAW pattern corresponding to the candidate does not exist.

8. The synchronization method as claim in 1, wherein when the FAW pattern corresponding to the candidate does not exist, a first counter and a second counter of the hit weighting corresponding to the candidate arc reset.

9. The synchronization method as claim in 1, wherein when the additional information corresponding to the candidate is successive 0s, the additional information is valid and a first counter of the hit weighting is increased.

10. The synchronization method as claim in 1, wherein when the additional information corresponding to the candidate is successive 1s, the additional information is valid and a second counter of the hit weighting is increased

11. The synchronization method as claim in 1, wherein when the additional information corresponding to the candidate is not successive 0s, the additional informational is not valid and a first counter of the hit weighting is reset or decreased.

12. The synchronization method as claim in 1, wherein when the additional information corresponding to the candidate is not successive 1s, the additional informational is not valid and a second counter of the hit weighting is reset or decreased.

13. The synchronization method as claim in 1, wherein the bitstrcam comprises a plurality of Neat-Instantanenously Compunded Audio Multiplex (NICAM) frames and each NICAM frames comprises 728 candidates.

14. The synchronization method as claim in 1, wherein when the additional information corresponding to the candidate is eight successive Os and eight successive 1s, the additional information corresponding to the candidate is valid.

15. The synchronization method as claim in 1, wherein the criterion is the FAW pattern corresponding to the candidate exists and the additional information corresponding to the candidate is a sequence of 8 successive Os and 8 successive 1s or 8 successive 1s and 8 successive Os.

16. A multimedia data system, comprising:
a demodultation unit demodulating a bitstream to output a demodulated bitstream;
a synchronization unit receiving the demedulated bitstream, wherein the candidate stands for a possible frame start point, checking whether a FAW pattern corresponding to a candidate of the bitstream exists, checking whether an additional information corresponding to the candidate of the bitstream is valid when the FAW pattern exists, wherein the additional information is a control bit following the FAW pattern of the corresponding candidate:
determining a valid control bit sequence over a predetermined number of frames by counting the successive Os and the successive 1s with a at least one counter wherein one change from 0 to 1 and one change from 1 to 0 is allowed defining also an allowed rotation combination of successive 0s and 1s over the number of frames otherwise the counter is decreased or reset;
determining whether the hit weighting of the candidate meets a criterion by checking the counter and outputting a synchronization signal when the hit weighting meets the criterion; and
a decoding unit decoding to output a decoded bitstream when the synchronization signal is outputted.

17. The multimedia data system as claim in 16, wherein the hit neighing corresponding to the candidate is increased when the FAW pattern corresponding to the candidate exists and the additional information is not against a valid sequence.

18. The multimedia data system an claim in 16, wherein the hit weighting corresponding to the candidate is decreased whan the FAW pattern corresponding to the candidate exists and the additional information is not a valid sequence.

19. The multimedia data system as claim in 16, wherein the hit weighting corresponding to the candidate is reset when the FAW pattern corresponding to the candidate does not exist.

20. The multimedia data system as claim in 16, wherein when the additional information corresponding to the candidate is successive 0s, the additional information is valid and a first counter of the hit weighting is increased.

21. The multimedia data system as claim in 16, wherein when the additional information for the candidate is successive is, the additional information is valid and a second counter of the hit weighting is increased.

22. The multimedia data system as claim in 16, wherein when the additional information corresponding to the candidate is not successive Os, the additional information is not valid and a first counter of the hit weighting is reset or decreased.

23. The multimedia data system has claim in 16, wherein when the additional information corresponding to the candidate is not successive is, the additional information is not valid and a second counter of the hit weighting is reset or decreased.

24. The multimedia data system as claim in 16, wherein the bitstream comprises a plurality of Near-Instantaneously Companded Audio Multiplex (NICAM) frames and each NICAM frames comprises 728 candidates.

25. The multimedia data system as claim in 16, wherein the criterion is the FAW pattern corresponding to tho candidate exists and the additional information corresponding to the candidate is a sequence of 8 successive Os and 8 successive 1s or 8 successive 1s and 8 successive Os.

## Patentansprüche

1. Ein Synchronlsatlonsverfahren, umfassend:
empfangen eines Bitstroms:
Prüfen ob ein Rahmen Ausrichtung Word/Frame Alignment Word (FAW) Muster korrespondierend zu einem Kandidat des Bitstroms existiert, wobei der Kandidat für einen möglichen Rahmenstartpunkt steht;
Prüfen ob eine Zusatzinformation korrespondierend zu dem Kandidat des Bitstream zulässig ist, wenn das FAW Muster existiert, wobei die Zusatzinformation ein Kantroll-Bit ist, das dem FAW Muster des korrespondierenden Kandidat folgt;
Bestimmen eines zulässigen Kontroll-Bit-Sequenz über eine vorbestimmte Anzahl von Rahmen durch Zählen der aufeinanderfolgenden 0en und der aufeinanderfolgenden 1en mit zu mindestens einem Zähler, wobei ein Wechsel von 0 zu 1 und ein Wechsel von 1 zu 0 erlaubt sind, die eine ebenfalls erlaubte Rotationskombination von aufeinanderfolgenden 0en und 1en definieren über die Anzahl von Rahmen, andernfalls wird der Zähler herabgesetzt oder zurückgesetzt; und
Bestimmen, ob ein Hochgewichten des Kandidat ein Kriterium trifft, durch Prüfen des Zählers, und falls das Hochgewichten korrespondierend zu dem Kandidaten das Kriterium erfüllt, so ist die Synchronisation des Bit-Stroms abgeschlossen.

2. Das Synchronisation Verfahren nach Anspruch 1, wobei wenn das Hochgewichten des Kandidat das Kriterium erfüllt, erfolgt ein Decodieren des Bitstroms.

3. Das Synchronisation Verfahren nach Anspruch 2, wobei der Kandidat, der das Kriterium erfüllt, ein Rahmen Startpunkt des Bitstroms ist.

4. Das Synchronisationsverfahren nach Anspruch 1, wobei die Zusatzinformation ein Blt ist gefolgt von dem FAW Muster des korrespondierenden Kandidat.

5. Das Synchronisationsverfahren nach Anspruch 1, wobei die Hochgewichtung, die zu dem Kandidaten korrespondiert, erhöht wird, wenn das FAW Muster, das zu dem Kandidaten korrespondiert existiert,und die Zusatzinformation nicht gegen eine zulässige Sequenz ist.

6. Das Synchronisationsverfahren nach Anspruch 1, wobei das Hochgewichten, das zu einem Kandidaten korrespondiert, herabgesetzt wird, wenn das FAW Muster korrespondierend zu dem Kandidaten existiert und die Zusatzinformation nicht eine zulässige Sequenz ist.

7. Das Synchronisationsverfahren nach Anspruch 1, wobei das Hochgewichten, das zu dem Kandidaten korrespondiert, zurückgesetzt wird, wenn das FAW Muster korrespondierend zu den Kandidaten nicht existiert.

8. Das Synchronisationsverfahren nach Anspruch 1, wobei wenn das FAW Muster korrespondierend zu dem Kandidaten nicht existiert, werden ein erster Zähler und ein zwelter Zähler des Hochgewichtes korrespondierend zu dem Kandidaten zurückgesetzt.

9. Das Synchronisationsverfahren nach Anspruch 1, wobei wenn die Zusatzinformationen korrespondierend zu dem Kandidat aufeinanderfolgenden 0en sind, die Zusatzinformation zulässig ist und ein erster Zähler des Hochgewichtens wird erhöht.

10. Das Synchronisationsverfahren nach Anspruch 1, wobei wenn die Zusatzinformation korrespondierend zu dem Kandidat aufeinanderfolgenden 1en sind, die Zusatzinformation zulässig ist und ein zweiter Zähler des Hochgewichtens wird erhöht.

11. Das Synchronisationsverfahren nach Anspruch 1, wobei wenn die Zusatzinformation korrespondierend zu dem den Kandidat keine aufeinanderfolgenden 0en sind, die Zusatzinformation nicht zulässig Ist und ein erster Zähler des Hochgewichtens wird zurückgesetzt oder heruntergesetzt.

12. Das Synchronisationsverfahren nach Anspruch 1, wobei wenn die Zusatzinformation korrespondierend zu dem Kandidat keine aufeinanderfolgenden 1en sind, so ist die Zusatzinformation nicht zulässig und ein zweiter Zähler des Hochgewichtens wird zurückgesetzt oder herabgesetzt.

13. Das Synchronisationsverfahren nach Anspruch 1, wobei der Bitstrom eine Vielzahl von Nearinstantantaneously Companded Audio Multiplex (NICAM) Rahmen umfasst und jeder NICAM Rahmen umfasst 728 Kandiaten.

14. Das Synchronisationsverfahren nach Anspruch 1, wobei wenn die Zusatzinformation korrespondierend zu dem Kandidat 8 aufeinanderfolgenden 0en sind und 8 aufeinanderfolgenden 1en so ist die Zusatzinformation korrespondierend zu dem Kandidat zulässig.

15. das Synchronisationsverfahren nach Anspruch eins, wobei das Kriterium, das das FAW Muster ist, das zu dem Kandidaten korrespondiert, existiert und die Zusatzinformation korrespondierend zu dem Kandidaten ist eine Sequenz von 8 aufeinanderfolgenden 0en und 8 aufeinanderfolgenden 1en oder 8 aufeinanderfolgenden 1en und 8 aufeinanderfolgenden 0en.

16. ein Multimedia- Datensystem, umfassend:
eine Emulationseinheit, die einen Bit-Strom demoduliert, um einen demolierten Bit-Strom auszugeben;
Ein Synchronisationseinheit, die den demodulierten Bit-Strom empfängt, wobei der Kandidat für einen möglichen Rahmenstartpunkt steht, überprüft, ob ein FAW Muster korrespondierend zu einem Kandidaten des Bit-Stroms existiert, überprüft, ob eine Zusatzinformation en, die zu dem Kandidaten des Bitstroms korrespondiert, zulässig ist, wenn das FAW Muster existiert, wobei die Zusatzinformation ein Kontroll-Bit ist, dass dem FAW Muster des korrespondierenden Kandidaten folgt;
Bestimmen einer zulässigen Kontroll-Bitsequenz über eine vorbestimmte Anzahl von Rahmen durch Zählen der aufeinanderfolgenden 1en und der aufeinanderfolgenden Den mit mindestens einem Zähler, wobei ein Wechsel von 0 zu ein Wechsel von 1 zu 0 erlaubt ist, die ebenfalls eine erlaubte Rotationskombination von aufeinanderfolgenden Den und 1en über die Anzahl von Rahmen definieren, andernfalls wird der Zähler herabgesetzt oder zurückgesetzt;
Bestimmen, ob das Hochgewichten des Kandidaten ein Kriterium erfüllt, durch überprüfen des Zählers und Ausgabe eine Synchronisation-Signals, wenn das Hochgewichten das Kriterium erfüllt; und
eine Decodier-Einheit, die als Ausgabe einen Bitstrom codiert, wenn das Synchronlsatlons-Signal ausgegeben wird.

17. Das Multimedia-Datensystem nach Anspruch 16, wobei das Hochgewichten, das zum Kandidaten korrespondiert, erhöht wird, wenn das FAW Muster korrespondierend zu dem Kandidaten existiert und die Zusatzinformatlon nicht gegen eine zulässige Sequenz.

18. Das Multimedia-Datensystem nach Anspruch 16, wobei das Hochgewichten korrespondierend zu dem Kandidaten herabgesetzt wird, wenn das FAW Muster korrespondierend zu dem Kandidaten existiert und die Zusatzinformation nicht gegen eine zulässige Sequenz ist.

19. Das Multimedia-Datensystem nach Anspruch 16, wobei das Hochgewichten, das zum Kandidaten korrespondiert, zurückgesetzt wird, wenn das FAW Muster korrespondierend zu dem Kandidaten nicht existiert.

20. Das Multimedia-Datensystem nach Anspruch 16, wobei wenn die Zusatzinformation korrespondierend zu dem Kandidaten aufeinanderfolgende 0en sind, die Zusatzinformation zulässig ist, und ein erster Zähler des Hochgewichten wird erhöht.

21. Das Multlmedia-Datensystem nach Anspruch 16, wobei wenn die Zusatzinformation für den Kandidaten sukzessive len sind, ist die Zusatzinformation zulässig und ein zweiter Zähler des Hochgewichtes wird erhöht.

22. Das Multimedia-Datensystem nach Anspruch 16, wobei, wenn die Zusatzinformation korrespondierend zu dem Kandidaten keine aufeinanderfolgenden 0en sind, die Zusatzinformation nicht zulässig ist und ein erster Zähler des Hochgewichtes wird zurückgesetzt oder herabgesetzt.

23. Das Multimedia-Datensystem nach Anspruch 16, wobei wenn die Zusatzinformation korrespondierend zu dem Kandidaten keine aufeinanderfolgenden 1en sind, die Zusatzinformation nicht zulässig ist, und ein zweiter Zähler des Hochgewichtes wird zurückgesetzt oder herabgesetzt.

24. Das Multimedia-Datensystem nach Anspruch 16, wobei der Bitstrom eine Vielzahl von Near-Instantantaneously Companded Audio Multiplex (NICAM) Rahmen umfasst und jeder NICAM Rahmen umfasst 728 Kandidaten.

25. Das Multimedia-Datensystem nach Anspruch 16, wobei das Kriterium, das das FAW Muster ist, das zu dem Kandidaten korrespondiert, existiert und die Zusatzinformation korrespondierend zu dem Kandidaten ist eine Sequenz von 8 aufeinanderfolgenden 0en und 8 aufeinanderfolgenden 1en oder 8 aufeinanderfolgenden 1en und 8 aufeinanderfolgenden 0en.

## Revendications

1. Une méthode de synchronisation, comprenant:
la réception d'un flux de bits;
la vérification de l'existence d'un motif de Mot d'Alignement de Trame (FAW) correspondant à un candidat du flux de bits, dans lequel le candidat correspond à un point de départ de trame éventuel;
la vérification qu'une information additionnelle correspondant au candidat du flux de bits est valide lorsque le motif FAW existe, dans laquelle l'information additionnelle est un bit de commande suivant le motif FAW du candidat correspondant;
la détermination d'une séquence de bit de commande valide sur un nombre prédéterminé de trames en comptant les "0" successifs et les "1" successifs au moyen d'au moins un compteur dans lequel une commutation de "0" à "1" et une commutation de "1" à "0" sont permises, définissant également une combinaison tournante permise de "0" et de "1" successifs sur un nombre de trames, et dans le cas contraire la réinitialisation du compteur; et
la détermination qu'une pondération d'occurrence du candidat correspond à un critère au moyen d'un test du compteur, et si la pondération d'occurrence correspondant au candidat satisfait au critère, l'achèvement de la synchronisation du flux de bits.

2. La méthode de synchronisation telle que revendiquée dans la revendication 1, dans laquelle est effectué le décodage du flux de bits lorsque la pondération d'occurrence du candidat satisfait au critère.

3. La méthode de synchronisation telle que revendiquée dans la revendication 2, dans laquelle le candidat satisfaisant au critère est un point de départ de trame du flux de bits.

4. La méthode de synchronisation telle que revendiquée dans la revendication 1, dans laquelle l'information additionnel est un bit suivant le motif FAW du candidat correspondant.

5. La méthode de synchronisation telle que revendiquée dans la revendication 1, dans laquelle la pondération d'occurrence correspondant au candidat est augmenté lorsque le motif FAW correspondant au candidat existe et que l'information additionnelle n'est pas contraire à une séquence valide.

6. La méthode de synchronisation telle que revendiquée dans la revendication 1, dans laquelle la pondération d'occurrence correspondant au candidat est réduite lorsque le motif FAW correspondant au candidat existe et que l'information additionnelle n'est pas une séquence valide.

7. La méthode de synchronisation telle que revendiquée dans la revendication 1, dans laquelle la pondération d'occurrence correspondant au candidat est réinitialisée lorsque le motif FAW correspondant au candidat n'existe pas.

8. La méthode de synchronisation telle que revendiquée dans la revendication 1, dans laquelle sont réinitialisés un premier et un second compteur de la pondération d'occurrence correspondant au candidat lorsque le motif FAW correspondant au candidat n'existe pas.

9. La méthode de synchronisation telle que revendiquée dans la revendication 1, dans laquelle l'information additionnelle est valide et un premier compteur de la pondération d'occurrence est augmenté lorsque l'information additionnelle correspondant à un candidat est une succession de "0".

10. La méthode de synchronisation telle que revendiquée dans la revendication 1, dans laquelle l'information additionnelle est valide et un second compteur de la pondération d'occurrence est augmenté lorsque l'information additionnelle correspondant à un candidat est une succession de "1".

11. La méthode de synchronisation telle que revendiquée dans la revendication 1, dans laquelle l'information additionnelle n'est pas valide et un premier compteur de la pondération d'occurrence est réinitialisé ou réduit lorsque l'information additionnelle correspondant à un candidat n'est pas une succession de "0".

12. La méthode de synchronisation telle que revendiquée dans la revendication 1, dans laquelle l'information additionnelle n'est pas valide et un second compteur de la pondération d'occurrence est réinitialisé ou réduit lorsque l'information additionnelle correspondant à un candidat n'est pas une succession de "1".

13. La méthode de synchronisation telle que revendiquée dans la revendication 1, dans laquelle le flux de bits comporte une pluralité de trames NICAM (*Near-Instantaneously Companded Audio Multiplex*) et chacune des trames NICAM comporte 728 candidats.

14. La méthode de synchronisation telle que revendiquée dans la revendication 1, dans laquelle l'information additionnelle correspondant à un candidat est valide lorsque l'information additionnelle correspondant au candidat comporte huit "0" successifs et huit "1" successifs.

15. La méthode de synchronisation telle que revendiquée dans la revendication 1, dans laquelle le critère est le fait que le motif FAW correspondant au candidat existe et que l'information additionnelle correspondant au candidat est une séquence de 8 "0" successifs et huit "1" successifs ou huit "1" successifs et 8 "0" successifs.

16. Un système de données multimédia, comportant:
une unité de démodulation démodulant un flux de bits pour générer un flux de bits démodulé;
une unité de synchronisation recevant le flux de bits démodulé, dans lequel le candidat correspond à un point de départ de trame éventuel; vérifiant qu'un motif FAW correspondant à un candidat du flux de données existe, vérifiant qu'une information additionnelle correspondant au candidat du flux de bits est valide lorsque le motif FAW existe, vérifiant que l'information additionnelle est un bit de commande suivant le motif FAW du candidat correspondant;
déterminant d'une séquence de bit de commande valide sur un nombre prédéterminé de trames en comptant les "0" successifs et les "1" successifs au moyen d'au moins un compteur dans lequel une commutation de "0" à "1" et une commutation de "1" à "0" sont permises, définissant également une combinaison tournante permise de "0" et de "1" successifs sur un nombre de trames, et dans le cas contraire la réinitialisation du compteur; et
la détermination qu'une pondération d'occurrence du candidat correspond à un critère au moyen d'un test du compteur, et si la pondération d'occurence correspondant au candidat satisfait au critère, la génération d'un signal de synchronisation; et
une unité de décodage décodant vers la sortie le flux de bits décodant lors de la génération du signal de synchronisation.

17. Le système de données multimédia tel que revendiqué dans la revendication 16, dans lequel la pondération d'occurrence correspondant au candidat est augmenté lorsque le motif FAW correspondant au candidat existe et que l'Information additionnelle n'est pas contraire à une séquence valide.

18. Le système de données multimédia tel que revendiqué dans la revendication 16, dans lequel la pondération d'occurrence correspondant au candidat est réduite lorsque le motif FAW correspondant au candidat existe et que l'information additionnelle n'est pas une séquence valide.

19. Le système de données multimédia tel que revendiqué dans la revendication 16, dans lequel la pondération d'occurrence correspondant au candidat est réinitialisée lorsque le motif FAW correspondant au candidat n'existe pas.

20. Le système de données multimédia tel que revendiqué dans la revendication 16, dans lequel l'information additionnelle est valide et un premier compteur de la pondération d'occurrence est augmenté lorsque l'information additionnelle correspondant à un candidat est une succession de "0".

21. Le système de données multimédia tel que revendiqué dans la revendication 16, dans lequel l'information additionnelle est valide et un second compteur de la pondération d'occurrence est augmenté lorsque l'information additionnelle correspondant à un candidat est une succession de "1".

22. Le système de données multimédia tel que revendiqué dans la revendication 18, dans lequel l'information additionnelle n'est pas valide et un premier compteur de la pondération d'occurrence est réinitialisé ou réduit lorsque l'information additionnelle correspondant à un candidat n'est pas une succession de "0".

23. Le système de données multimédia tel que revendiqué dans la revendication 16, dans lequel l'information additionnelle n'est pas valide et un second compteur de la pondération d'occurrence est réinitialisé ou réduit lorsque l'information additionnelle correspondant à un candidat n'est pas une succession de "1".

24. Le système de données multimédia tel que revendiqué dans la revendication 16, dans lequel le flux de bits comporte une pluralité de trames NICAM (*Near-Instenteneously Companded Audio Multiplex*) et chacune des trames NICAM comporte 728 candidats.

25. Le système de données multimédia tel que revendiqué dans la revendication 16, dans lequel le critère est le fait que le motif FAW correspondant au candidat existe et l'information additionnelle correspondant au candidat est une séquence de huit "0" successifs et huit "1" successifs ou huit "1" successifs et huit "0" successifs.
